# FASCICULE DE BREVET EUROPEEN

(11) **EP 4 131 041 B1**
(45) Date de publication et mention de la délivrance du brevet: **03.01.2024**
(21) Numéro de dépôt: 22188225.1
(22) Date de dépôt: 02.08.2022
(51) Int. Cl.: G06F 21/52

(54) **PROCÉDÉ DE VÉRIFICATION D'UNE EXÉCUTION D'UN PROGRAMME LOGICIEL**
VERFAHREN ZUR ÜBERPRÜFUNG EINER AUSFÜHRUNG EINES SOFTWAREPROGRAMMS
METHOD FOR VERIFYING EXECUTION OF A SOFTWARE PROGRAM

(30) Priorité: 05.08.2021 FR 2108499
(43) Date de publication de la demande: 08.02.2023
(73) Titulaire: STMicroelectronics (Grand Ouest) SAS, 72100 Le Mans (FR)
(72) Inventeur: JAOUEN, Michel, 72530 YVRE L'EVEQUE (FR); TROTTIER, Gilles, 72500 FAY (FR)
(74) Mandataire: Casalonga

(56) Documents cités:
- H Ozdoanolu ET AL: "SmashGuard: A Hardware Solution to Prevent Security Attacks on the Function Return Address", , 22 novembre 2003 (2003-11-22), pages i-31, XP055318185, Extrait de l'Internet: URL:https://engineering.purdue.edu/Researc hGroups/SmashGuard/SmashGuard_TR2_Nov03.pd f
- ROUF MOHAMMAD ABDUR ET AL: "Low-Cost Control Flow Protection via Available Redundancies in the Microprocessor Pipeline", IEEE TRANSACTIONS ON VERY LARGE SCALE INTEGRATION (VLSI) SYSTEMS, IEEE SERVICE CENTER, PISCATAWAY, NJ, USA, vol. 23, no. 1, 1 janvier 2015 (2015-01-01), pages 131-141, XP011571020, ISSN: 1063-8210, DOI: 10.1109/TVLSI.2013.2297573 [extrait le 2015-01-19]
- DAVI LUCAS ET AL: "HAFIX hardware-assisted flow integrity extension", PROCEEDINGS OF THE 34TH ACM SIGMOD-SIGACT-SIGAI SYMPOSIUM ON PRINCIPLES OF DATABASE SYSTEMS, ACMPUB27, NEW YORK, NY, USA, 7 juin 2015 (2015-06-07), pages 1-6, XP058511321, DOI: 10.1145/2744769.2744847 ISBN: 978-1-4503-3550-8

## Description

Des modes de réalisation et de mise en oeuvre concernent les vérifications d'exécutions de programmes logiciels, en particulier en matière de vérification de sécurité contre par exemple des injections de fautes.

Les techniques d'injections de fautes, utilisées en ingénierie inversée, permettent de provoquer un comportement inhabituel des opérations d'un système électronique, par exemple un microcontrôleur, en introduisant volontairement des erreurs (« injection de faute ») et dans le but d'extraire des informations secrètes.

Par exemple, suite à une injection de fautes dans le système, les registres d'une unité de traitement (appelée processeur) peuvent être modifiés.

Les opérations logicielles exécutés par le processeur sont classiquement programmées de manière à implémenter un contrôle de flux pour résister à ces modifications. Cela étant, la programmation est faite dans un langage de haut niveau, typiquement un « langage de programmation » tel que le code C, et les instructions en langage de bas niveau, ou « langage machine » tel qu'un code assembleur, résultant d'une compilation (ou « assemblage ») peuvent ne pas se comporter comme prévu.

Par exemple, suite à une écriture dans un périphérique, le contrôle de flux effectue typiquement une relecture dans le périphérique pour vérifier que la valeur a bien été écrite. Or, lorsque le registre contenant l'adresse du périphérique est modifié par l'injection de faute, l'écriture et la lecture peuvent être effectuées à la même mauvaise adresse. Ainsi, la vérification détecte que la donnée est écrite correctement à une certaine adresse, sans pouvoir détecter que l'adresse est erronée. En conséquence, le contrôle de flux n'est pas efficace pour cette erreur.

Une technique classique contre ce problème comprend une implémentation de l'écriture dans une fonction, puis une implémentation de la relecture dans une autre fonction.

Cela étant, d'une part cette technique complexifie la programmation, et d'autre part, certaines recommandations de sécurité exigent d'effectuer la vérification immédiatement après l'écriture de la donnée, pour s'assurer que la protection est réellement active, avant de poursuivre toute autre exécution. En pratique, cette technique n'est pas applicable.

Une autre technique classique contre ce problème comprend une utilisation d'une combinaison d'instructions spécifiques dans le code de haut niveau, de manière à générer une variable volatile en mémoire RAM (pour « Random Access Memory », élément de mémoire vive bien connu de l'homme de l'art) pour porter l'adresse, et afin de forcer un rechargement de l'adresse, depuis l'emplacement de mémoire RAM, dans le registre avant d'effectuer la relecture.

En d'autres termes, cette autre technique introduit un codage spécifique en langage de haut niveau, passant par une indirection en mémoire RAM (une « indirection » signifie « un adressage », ou « une utilisation d'un emplacement mémoire ») pour utiliser l'adresse. En conséquence, cette autre technique complexifie elle aussi la programmation de la vérification en imposant la nature « volatile » de la variable contenant l'adresse, et utilise des ressources supplémentaires et non optimisées (une variable volatile étant une variable sur laquelle aucune optimisation de compilation n'est appliquée). Et, cette utilisation de variable volatile ne remplace pas l'étape de vérification de l'assemblage généré.

H Ozdoanolu ET AL: "SmashGuard: A Hardware Solution to Prevent Security Attacks on the Function Return Address",, 22 novembre 2003 (2003-11-22), pages i-31, décrit un procédé de vérification d'une exécution d'un programme logiciel comprenant l'ajout au processeur d'une pile matérielle additionnelle (*hardware stack*) dans laquelle est stockée l'adresse de retour. Une instruction de retour fait que l'adresse stockée soit extraite du haut de la pile additionnelle (*pop*) et soit comparée a son adresse de retour. Si les deux adresses ne correspondent pas une exception matérielle (*hardware exception*) est soulevée.

Ainsi, il existe un besoin de proposer des procédés de vérification d'une opération d'écriture simples en matière de programmation des opérations de protection, efficaces en matière d'exécution et de consommation de ressources, et fiable en matière de sécurité.

Des modes de mise en oeuvre proposent des procédés de vérification de l'exécution d'un programme logiciel comprenant au moins une opération d'écriture à une adresse de destination affectée dans un registre ; et une opération de vérification utilisant une instruction « mnemonic », c'est-à-dire une instruction imposant au compilateur l'utilisation d'une instruction particulière. Le compilateur produit à cet égard une réaffectation de la même adresse de destination dans le même registre, après l'écriture et avant la relecture, de manière à effacer l'éventuelle faute injectée dans l'adresse de destination de façon simple, efficace et fiable.

Un « mnemonic » est un terme, un symbole ou un nom utilisé pour définir ou spécifier une fonction informatique. Les mnemonic sont utilisés en informatique pour fournir aux utilisateurs un moyen d'accéder rapidement à une instruction, une fonction, un service ou un processus, en évitant une méthode plus longue habituellement utilisée pour l'exécuter ou le réaliser.

Selon un aspect, il est proposé à cet égard un procédé de vérification d'une exécution d'un programme logiciel compilé stocké dans une mémoire programme d'un processeur et exécuté par le processeur, le procédé comprenant au moins une opération d'écriture, ladite au moins une opération d'écriture compilée comprenant :
- une affectation d'une adresse de destination dans un registre du processeur ;
- une écriture d'une donnée à l'emplacement pointé par l'adresse de destination contenue dans le registre ;
dans lequel une opération de vérification compilée comprend :
- une réaffectation de la même adresse de destination dans le même registre ;
- une lecture de la donnée contenue à l'emplacement pointé par l'adresse de destination contenue dans le registre après la réaffectation ;
- une comparaison entre la donnée lue et la donnée écrite.

En particulier, les étapes de l'opération d'écriture et les étapes de l'opération de vérifications sont des instructions compilées, c'est-à-dire des instructions de langage machine, typiquement générée automatiquement par un compilateur à partir d'un code en langage de programmation.

Ainsi, dans le procédé selon cet aspect, le compilateur est « forcé » à effectuer ladite réaffectation de l'adresse de destination dans le registre, et, en conséquence, une injection de faute dans le contenu dudit registre après la première affectation de l'adresse de destination pourra impacter l'opération d'écriture, mais sera « effacée » pour la lecture de l'opération de vérification. L'opération de vérification est alors capable d'identifier et de détecter le dysfonctionnement.

Selon un mode de mise en oeuvre, la réaffectation de l'opération de vérification est effectuée pour toutes les affectations immédiates de données dans des registres, telles que des adresses de destination d'opérations d'écriture, faites lors de l'exécution de ladite au moins une opération d'écriture, une affectation immédiate étant une écriture dans un registre d'une donnée présente à une adresse définie par un décalage ajouté à une valeur d'une adresse absolue.

En effet, le cas d'une injection de faute sur une valeur d'adresse qui se répercute lors de la vérification de l'écriture, est particulièrement problématique lorsque l'injection de faute touche à l'adresse absolue mise dans des registres pour effectuer des affectations immédiates. En effet, lors d'une affectation immédiate, l'adresse définie par un décalage sur une adresse absolue est typiquement stockée temporairement dans un registre, pour pouvoir accéder à la donnée présente à cette adresse.

Ce mode de mise en oeuvre permet ainsi une prévention généralisée sur toutes les affectations immédiates mises en oeuvre pour la ou les opération(s) d'écriture.

Selon un mode de mise en oeuvre, l'exécution dudit programme logiciel comprend une compilation d'un code de langage de programmation en instructions de langage machine, et au moins une instruction de langage machine dédiée à la mise en oeuvre de ladite réaffectation est imposée lors de la compilation par un mnemonic dans le code de langage de programmation.

En d'autres termes, dans le langage de programmation, le mnemonic impose lors de la compilation la génération d'une ou plusieurs instruction(s) en langage machine (par exemple des instructions en assembleur de rechargements de registres) dédiée(s) à la mise en oeuvre de ladite réaffectation.

Le compilateur, dans son contexte de compilation, est ainsi forcé à « oublier » qu'un registre donné contient (théoriquement) la même valeur que celle nécessaire pour effectuer la vérification du registre.

Une instruction en langage machine générée à la compilation est usuellement désignée par un « mnemonic », ou un « opcode » (contraction de « code opération ») qui lui sont associés. Le « mnemonic » est une représentation symbolique plus facile à lire et à identifier par un humain que l'« opcode » numérique d'une instruction dans le langage machine du type assembleur qui résulte de la compilation du code en langage de programmation. Dans le langage de programmation, de haut niveau, on appelle également « mnemonic » un code prévu pour imposer une génération des instructions « opcode » du langage machine correspondantes lors de la compilation.

Ainsi, dans ce mode de mise en oeuvre, la compilation bénéficie avantageusement d'un mnemonic imposant ladite réaffectation.

Selon un mode de mise en oeuvre, ladite au moins une opération d'écriture et l'opération de vérification sont mise en oeuvre dans l'exécution d'une même fonction du programme logiciel.

Selon un mode de mise en oeuvre, l'exécution de ladite même fonction du programme logiciel comprend une compilation de code mettant en oeuvre une optimisation des ressources comprenant une réutilisation du contenu affecté dans ledit registre pour des instructions distinctes de ladite même fonction.

En effet, l'optimisation d'une fonction à la compilation peut engendrer, d'une façon a priori inattendue lors de la programmation, la répercussion sur l'adresse vérifiée d'une faute injectée sur l'adresse écrite. D'autre part, ne pas utiliser une fonction distincte pour effectuer la vérification est avantageux en soi.

Selon un mode de mise en oeuvre, ladite comparaison de l'opération de vérification comprend une génération d'un message d'erreur si la donnée lue et la donnée écrite ne sont pas identiques.

Selon un autre aspect, il est également proposé un produit programme d'ordinateur comprenant des instructions qui, lorsque le programme est exécuté par un ordinateur, conduisent celui-ci à mettre en oeuvre le procédé tel que défini ci-avant.

Selon un autre aspect, il est également proposé un support lisible par ordinateur comprenant des instructions qui, lorsqu'elles sont exécutées par un ordinateur, conduisent celui-ci à mettre en oeuvre le procédé tel que défini ci-avant.

Selon un autre aspect, il est également proposé un dispositif comprenant un processeur, une mémoire programme configurée pour contenir un programme logiciel compilé destiné à être exécuté par le processeur, le programme logiciel comprenant des instructions qui, lorsqu'il est exécuté par le processeur, conduisent celui-ci à mettre en oeuvre le procédé tel que défini ci-avant.

D'autres avantages et caractéristiques de l'invention apparaîtront à l'examen de la description détaillée de mode de mise en oeuvre, nullement limitatifs, et des dessins annexés, sur lesquels :
[Fig 1] ;
[Fig 2] ;
[Fig 3] ;

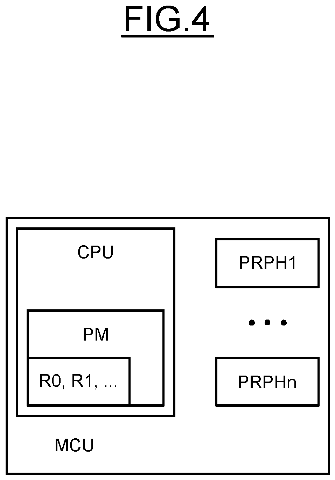

[Fig 4] illustrent des modes de mise en oeuvre et de réalisation de l'invention.

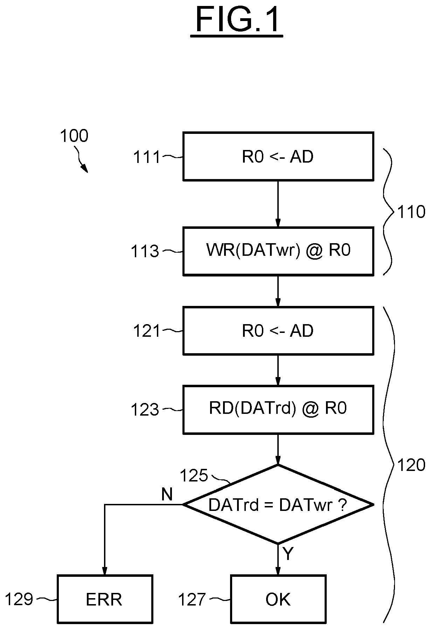

La figure 1 représente un procédé 100 de vérification d'une exécution d'un programme logiciel, stocké en pratique dans une mémoire programme MP (figure 4) d'une unité de traitement, également appelé processeur, et exécuté par le processeur CPU (figure 4). Les étapes 111-129 du procédé 100 correspondent aux actions du dispositif exécutant le programme après compilation d'un code de programmation, tel que le code C.

Le procédé 100 peut être matérialisé en pratique par un programme d'ordinateur comprenant des instructions qui, lorsque le programme est exécuté par un ordinateur, conduisent celui-ci à mettre en oeuvre le procédé 100.

Le procédé 100 peut aussi être matérialisé en pratique par un support lisible par ordinateur comprenant des instructions qui, lorsqu'elles sont exécutées par un ordinateur, conduisent celui-ci à mettre en oeuvre le procédé 100.

L'exécution du programme comprend une ou plusieurs opérations d'écriture 110 de données DATwr dans des emplacements mémoires désignés par des adresses AD, appelées adresses de destination. Dans cet exemple, une seule opération d'écriture 110 est mise en oeuvre. L'emplacement mémoire peut appartenir à un périphérique, tel qu'une mémoire non-volatile pour y enregistrer des données, ou bien un autre périphérique quelconque pour par exemple écrire un ou plusieurs bit(s) de commande dans un registre de statut.

L'opération d'écriture 110 comprend une affectation 111 de l'adresse de destination AD dans un registre R0, c'est-à-dire un chargement du registre R0 avec la valeur de l'adresse de destination AD, puis une écriture 113, « WR() » de la donnée à écrire « DATwr » à l'emplacement pointé « @ » par l'adresse de destination contenue dans le registre R0.

Si une faute est injectée FLT dans le contenu du registre R0 entre l'affectation 111 et l'écriture 113, alors la donnée DATwr sera écrite à un emplacement erroné ayant l'adresse erronée.

Ensuite, une opération de vérification 120, dont le but est de vérifier que la donnée est correctement écrite à l'emplacement mémoire ayant l'adresse de destination, comprend d'abord une réaffectation 121 de la même adresse de destination AD dans le même registre R0.

En conséquence, l'éventuelle faute injectée FLT dans le contenu du registre R0 est effacée et l'adresse de destination non-erronée AD est bien chargée dans le registre R0.

Après la réaffectation 121, l'opération de vérification réalise une lecture 123, « RD » de la donnée contenue « DATrd » à l'emplacement pointé « @ » par l'adresse de destination AD contenue dans le registre R0.

Puis, à l'étape 125, la donnée lue « DATrd » est comparée avec la donnée écrite « DATwr » de l'étape 113.

Si la comparaison 125-Y identifie que la donnée lue « DATrd » est identique à la donnée écrite « DATwr », alors l'opération de vérification 120 n'a pas détecté d'anomalie, et le processeur est dans un état normal 127.

Si la comparaison 125-N identifie que la donnée lue « DATrd » n'est pas identique à la donnée écrite « DATwr », alors l'opération de vérification 120 a détecté une anomalie, et un message d'erreur ERR est généré à l'étape 129.

En effet, si une injection de faute FLT a été faite dans le registre R0 entre l'étape d'affectation 111 et l'étape d'écriture 113, alors la donnée DATwr n'a pas été écrite dans l'emplacement mémoire, qui contient au contraire la donnée lue DATrd à l'étape de lecture 123.

Par ailleurs, mettre en oeuvre une seconde injection de faute entre l'étape de réaffectation 121 et l'étape de lecture 123 de manière à produire la même adresse erronée lors de l'étape de lecture 123 que lors de l'étape d'écriture 113, est suffisamment difficile à mettre en oeuvre pour que le procédé de vérification 100 assure une protection satisfaisante contre les injections de fautes.

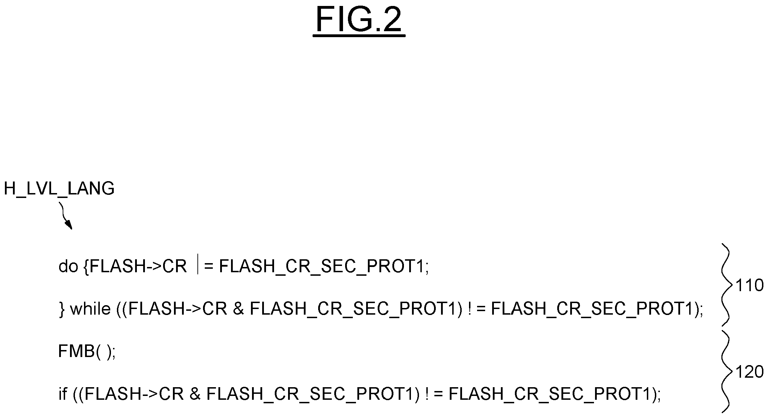

La figure 2 illustre un exemple de code en langage de haut niveau H_LVL_LANG, également appelé langage de programmation, dans cet exemple le code C, mettant en oeuvre le procédé de vérification 100 décrit en relation avec la figure 1.

Les lignes de code codant la mise en oeuvre de l'opération d'écriture sont référencées 110, et les lignes de code codant la mise en oeuvre de l'opération de vérification sont référencées 120.

Le code « FLASH->CR |= FLASH_CR_SEC_PROT1; » signifie « modifier flash->cr en faisant une opération OU logique avec sa valeur actuelle et FLASH _CR_SEC_PROT1 » et correspond à l'opération d'écriture élémentaire du langage de haut niveau H_LVL_LANG.

La boucle « do { } while ((FLASH->CR & FLASH_CR_SEC_PROT1) != FLASH_CR_SEC_PROT1); » signifie « tant que l'élément FLASH->CR ne contient pas au moins la valeur FLASH_CR_SEC_PROT1, faire l'action entre les accolades {} ».

Ceci correspond à une mécanique typiquement employée pour s'assurer que l'action entre les accolades de « do {} », c'est-à-dire l'écriture, a pu être faite. En effet, il est possible que le périphérique dans lequel est réalisée l'écriture soit beaucoup plus lent que l'unité de traitement qui exécute le code, et la boucle « while » permet d'attendre que le périphérique ait bien effectué l'écriture.

La ligne de code « FMB(); » correspond à un appel du type mnemonic, imposant au moins une instruction d'assembleur pour mettre en oeuvre l'étape de réaffectation 121 décrite précédemment en relation avec la figure 1.

Enfin, le code « if ((FLASH->CR & FLASH_CR_SEC_PROT1) != FLASH_CR_SEC_PROT1) » signifie « si FLASH->CR n'a pas la valeur FLASH_CR_SEC_PROT1 alors Vrai, sinon Faux », et correspond à la comparaison 125 du procédé 100 de la figure 1. Implicitement, « Vrai » et « Faux » sont les deux états du message d'erreur généré en fonction de la comparaison 125 (figure 1).

Dans cet exemple d'écriture du code mettant en oeuvre la comparaison 125 (figure 1), le message d'erreur est généré à l'état « Vrai » 129 (figure 1) si la donnée lue et la donnée écrite ne sont pas identiques, et à l'état « Faux » 127 (figure 1) si la donnée lue et la donnée écrite sont identiques.

Par exemple, l'instruction mnemonic « FMB() » est prévue pour effectuer la réaffectation 121 (figure 1) de toutes les affectations immédiates faites dans la compilation du code.

En particulier, l'instruction mnemonic « FMB() » peut être prévue pour effectuer la réaffectation 121 (figure 1) de toutes les affectations immédiates de données dans des registres, telles que des adresses de destination d'opérations d'écritures, faites lors de la compilation et l'exécution de ladite au moins une opération d'écriture 110.

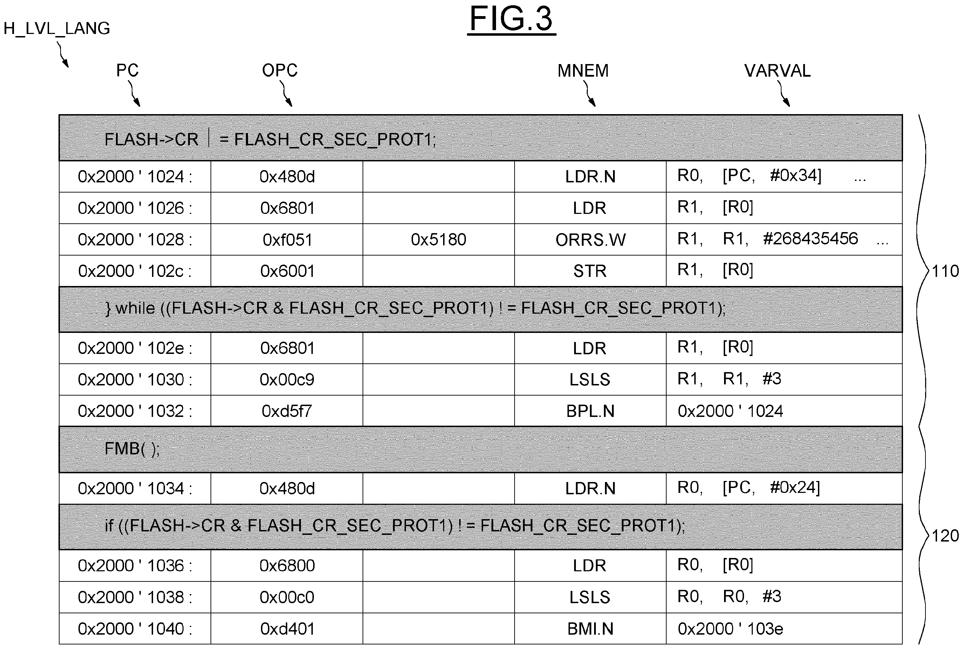

Une affectation immédiate est une écriture dans un registre d'une donnée présente à une adresse définie par un décalage ajouté à une valeur d'une adresse absolue « [PC, #0x34] » (figure 3). L'adresse absolue PC est usuellement l'adresse courante de l'exécution du programme, appelé compteur du programme (« program counter » en anglais).

En particulier également, l'instruction mnemonic « FMB() » est prévue pour imposer la réaffectation 121 (figure 1) desdites affectations immédiates faites dans la compilation et l'exécution d'une même fonction du programme logiciel.

En d'autres termes, l'instruction mnemonic, appelée par le code « FMB() », offre une barrière de faute mémoire simple à exploiter et efficace dans son exécution.

Ainsi, grâce à l'appel à l'instruction mnemonic « FMB() », un programmeur peut imposer et préciser le comportement du compilateur en fonction du contrôle de flux qu'il souhaite mettre en oeuvre, dans le code de haut niveau H_LVL_LANG tel que le code C.

On se réfère désormais à la figure 3.

La figure 3 illustre la compilation en langage de bas niveau L_L VL_LANG, également appelé langage machine ou code assembleur, du code de haut niveau H_LVL_LANG de la figure 2.

Les lignes de code assembleur compilé pour la mise en oeuvre de l'opération d'écriture sont référencées 110, et les lignes de code assembleur compilé pour la mise en oeuvre de l'opération de vérification sont référencées 120.

Les lignes de code de haut niveau H_LVL_LANG de la figure 2 sont reproduites au-dessus des lignes de code assembleur correspondant à leurs compilations respectives.

Les lignes de code assembleur sont identifiés par le compteur de programme PC 0x2000'1024-0x2000'1040, les instructions assembleur de chaque ligne sont identifiées d'une part par un opcode numérique OPC, et par une appellation mnemonic MNEM. Dans la suite, on désignera chaque instruction du code assembleur par leurs appellation mnemonic MNEM, et/ou par la valeur correspondante du compteur de programme PC. La dernière colonne VARVAL de chaque ligne d'instruction montre les données et variables, ou plus généralement les opérandes, utilisées dans l'exécution des instructions respectives.

Ainsi l'opération d'écriture 110 commence à la ligne 0x2000' 1024 par une affectation d'une adresse de destination dans un registre R0 avec l'instruction LDR.N commandant un chargement de la donnée contenue à l'adresse « PC, #0x34 » dans le registre R0.

L'adresse « PC, #0x34 » est une affectation immédiate du contenu située à une adresse obtenue par un décalage #0x34 ajouté à une valeur d'une adresse absolue PC. L'adresse absolue est l'adresse courante du compteur de programme PC, c'est-à-dire 0×2000' 1024 pour cette instruction LDR.N. La donnée chargée dans le registre R0 se trouve en conséquence à la ligne du compteur de programme PC 0×2000' 1058 (non représentée), qui contient l'adresse de destination AD (figure 1) de l'opération d'écriture.

L'instruction LDR de la ligne 0×2000' 1026 est un chargement du contenu [R0] pointé par la valeur du registre R0, c'est-à-dire le contenu de la case mémoire de l'adresse de destination AD (figure 1), dans un deuxième registre R1.

L'instruction ORRS.W de la ligne 0×2000' 1028 est une écriture d'un masque #268435456... exprimant les données à écrire « FLASH_CR_SEC_PROT1 », sur la valeur R1, dans le deuxième registre R1.

L'instruction STR de la ligne 0×2000' 102c est un chargement de la valeur du deuxième registre R1, c'est-à-dire les données à écrire « FLASH_CR_SEC_PROT1 » dans le contenu [R0] pointé par la valeur du registre R0, c'est-à-dire dans la case mémoire de l'adresse de destination.

Les instructions des lignes 0×2000' 102e à 0×2000' 1032 effectuent la boucle « while » optionnelle, en rechargeant LDR le contenu [R0] pointé par la valeur de R0 dans le registre R1, en comparant LSLS ce contenu avec la valeur précédente du registre R1, #3 (LSLS signifiant « level shift »), et le branchement BPL.N vers la ligne 0×2000' 1024 du début de l'opération d'écriture 110 tant que la comparaison ne détecte pas une identité.

L'instruction LDR.N de la ligne 0×2000' 1034 est imposé dans le code assembleur L_LVL_LANG par le code mnemonic « FMB() » du langage de haut niveau H_LVL_LANG, et correspond à la réaffectation de la même adresse de destination dans le même registre R0.

L'adresse de destination est contenue à la ligne du compteur de programme PC 0×2000' 1058 (non représentée), ainsi le registre R0 est de nouveau chargé LDR.N par une affectation immédiate du contenu située à l'adresse 0×2000' 1058 définie, pour cette instruction, par un décalage #0x24 ajouté à l'adresse courante 0×2000' 1034 du compteur de programme PC.

Ensuite, l'instruction LDR de la ligne 0×2000' 1036 effectue l'étape de lecture (123 figure 1) de la donnée [R0] contenue à l'emplacement pointé par la valeur du registre R0, c'est-à-dire la valeur de la case mémoire de l'adresse de destination, après la réaffectation de la ligne 0×2000' 1034.

Et, l'instruction LSLS de la ligne 0×2000' 1038 effectue l'étape de comparaison (125 figure 1) entre la donnée lue et la donnée écrite, en comparant LSLS le contenu pointé par la valeur du registre R0 après la réaffectation, avec le contenu pointé par la valeur précédente du registre R0.

On notera que la compilation L_LVL_LANG du code de haut niveau H_LVL_LANG peut mettre en oeuvre une optimisation des ressources comprenant une réutilisation du contenu affecté dans les différents registres R0, R1 pour des instructions distinctes de ladite même fonction.

Cependant, en rencontrant le mnemonic « FMB() » lors de la compilation du programme, le compilateur doit effectuer la réaffectation des données dans tous les registres qui contiennent des données obtenues par affectation immédiate. Le compilateur dans son contexte de compilation doit « oublier » qu'un registre R0, R1, contient la même valeur que celle nécessaire pour effectuer la vérification.

Dans le cas présent, cela se traduit par l'ajout de plusieurs instruction assembleur (telles que LDR.N de la ligne 0×2000' 1034), s'il y a plusieurs registres à réaffecter du fait de plusieurs affectations immédiates. En d'autres termes, le mnemonic « FMB() » impose au compilateur de refaire plusieurs affectations immédiates, ce qui générerait un ajout de plusieurs instructions assembleur.

La figure 4 illustre un exemple de dispositif MCU, par exemple un microcontrôleur, configuré pour mettre en oeuvre le procédé décrit en relation avec la figure 1.

Le dispositif comprend un processeur CPU, c'est-à-dire une unité de traitement, une mémoire programme PM est configurée pour contenir un programme logiciel compilé L_LVL_LANG, par exemple tel que décrit précédemment en relation avec la figure 3, afin d'être exécuté par le processeur CPU.

Ainsi, le programme logiciel comprend des instructions qui, lorsqu'il est exécuté par le processeur CPU, conduisent le processeur CPU à mettre en oeuvre le procédé 100 (figure 1).

La mémoire programme PM du processeur MPU contient notamment les emplacements mémoires des registres R0, R1 décrits en relation avec la figure 3, ainsi que notamment les lignes d'instruction 0×2000' 1024 à 0×2000' 1040 du code assembleur L_LVL_LANG.

Le dispositif MCU comporte en outre des périphériques PRPH1, ..., PRPHn, tel que par exemple une mémoire non-volatile, une interface de communication sur un bus de données, ou encore des unités de traitement sensibles tels que des traitements cryptographiques.

La mémoire non-volatile PRPH1 peut comporter des régions ayant des droits d'accès hiérarchisés, par exemple une région dite « sécurisée », et une région « non-sécurisée ».

L'emplacement mémoire ayant l'adresse de destination AD (figure 1) de l'opération d'écriture du programme logiciel peut par exemple appartenir à la région sécurisée de la mémoire non-volatile PRPH 1.

Les droits d'accès aux régions de la mémoire PRPH1 sont gérés par le processeur CPU en particulier, et peuvent être corrompu par des techniques d'injections de fautes FLT (figure 1), telles que décrites précédemment.

Ainsi, la mise en oeuvre du procédé 100 permet au dispositif MCU d'être résistant aux injections de faute, et donc de protéger les données appartenant, ou destinées à appartenir, à la région sécurisée de la mémoire non volatile PRPH1.

D'autre part, l'emplacement mémoire ayant l'adresse de destination AD (figure 1), commandé par l'opération d'écriture du programme logiciel, peut par exemple appartenir à une unité de traitement cryptographique PRPHn.

Là encore, les techniques d'injection de fautes FLT (figure 1) dans le traitement du processeur CPU pourraient accéder de manière non-autorisée à des informations secrètes, et des traitements sensibles de l'unité de traitement cryptographique PRPHn.

Et là encore, la mise en oeuvre du procédé 100 permet au dispositif MCU d'être résistant aux injections de faute, et donc de se prémunir contre des accès non-autorisées aux unités de traitements sensibles PRPHn.

## Revendications

1. Procédé de vérification d'une exécution d'un programme logiciel compilé stocké dans une mémoire programme d'un processeur et exécuté par le processeur, le procédé comprenant au moins une opération d'écriture (110), ladite au moins une opération d'écriture compilée (110) comprenant :
- une affectation d'une adresse de destination dans un registre du processeur (111) ;
- une écriture d'une donnée à l'emplacement pointé par l'adresse de destination contenue dans le registre (113) ;
dans lequel une opération de vérification compilée (120) comprend :
- une réaffectation de la même adresse de destination dans le même registre (121) ;
- une lecture de la donnée contenue à l'emplacement pointé par l'adresse de destination contenue dans le registre après la réaffectation (123) ;
- une comparaison entre la donnée lue et la donnée écrite (125).

2. Procédé selon la revendication 1, dans lequel la réaffectation (121) de l'opération de vérification (120) est effectuée pour toutes les affectations immédiates de données dans des registres faites lors de l'exécution de ladite au moins une opération d'écriture (110), une affectation immédiate étant une écriture dans un registre d'une donnée présente à une adresse définie par un décalage ajouté à une valeur d'une adresse absolue ([PC, #0x34]).

3. Procédé selon l'une des revendications 1 ou 2, dans lequel l'exécution dudit programme logiciel comprend une compilation d'un code de langage de programmation (H_LVL_LANG) en instructions de langage machine (L_LVL_LANG), et dans lequel au moins une instruction de langage machine (LDR.N) dédiée à la mise en oeuvre de ladite réaffectation est imposée lors de la compilation par un mnemonic (FMB()) dans le code de langage de programmation (H_LVL_LANG).

4. Procédé selon l'une des revendications précédentes, dans lequel ladite au moins une opération d'écriture (110) et l'opération de vérification (120) sont mise en oeuvre dans l'exécution d'une même fonction du programme logiciel.

5. Procédé selon la revendication 4, dans lequel l'exécution de ladite même fonction du programme logiciel comprend une compilation de code mettant en oeuvre une optimisation des ressources comprenant une réutilisation du contenu affecté dans ledit registre pour des instructions distinctes de ladite même fonction.

6. Procédé selon l'une des revendications précédentes, dans lequel ladite comparaison (125) de l'opération de vérification (120) comprend une génération d'un message d'erreur (129) si la donnée lue et la donnée écrite ne sont pas identiques.

7. Produit programme d'ordinateur comprenant des instructions qui, lorsque le programme est exécuté par un ordinateur, conduisent celui-ci à mettre en oeuvre le procédé (100) selon l'une des revendications 1 à 6.

8. Support lisible par ordinateur comprenant des instructions qui, lorsqu'elles sont exécutées par un ordinateur, conduisent celui-ci à mettre en oeuvre le procédé (100) selon l'une des revendications 1 à 6.

9. Dispositif comprenant un processeur (CPU), une mémoire programme (PM) configurée pour contenir un programme logiciel compilé (L_LVL_LANG) destiné à être exécuté par le processeur (CPU), le programme logiciel comprenant des instructions qui, lorsqu'il est exécuté par le processeur, conduisent celui-ci à mettre en oeuvre le procédé (100) selon l'une des revendications 1 à 6.

## Patentansprüche

1. Verfahren zur Überprüfung einer Ausführung eines kompilierten Softwareprogramms, das in einem Programmspeicher eines Prozessors gespeichert und vom Prozessor ausgeführt wird, wobei das Verfahren mindestens einen Eintragevorgang (110) umfasst, wobei der mindestens eine kompilierte Eintragevorgang (110) umfasst:
- eine Zuweisung einer Zieladresse in einem Register des Prozessors (111);
- eine Eintragung von Daten an der Stelle, auf die die Zieladresse zeigt, die im Register (113) enthalten ist;
wobei ein kompilierter Überprüfungsvorgang (120) umfasst:
- eine Neuzuweisung derselben Zieladresse in demselben Register (121);
- eine Lesung der Daten, die an der Stelle enthalten sind, auf die die Zieladresse zeigt, die im Register enthalten ist, nach der Neuzuweisung (123);
- einen Vergleich zwischen den gelesenen Daten und den eingetragenen Daten (125).

2. Verfahren nach Anspruch 1, wobei die Neuzuweisung (121) des Überprüfungsvorgangs (120) für alle unmittelbaren Zuweisungen von Daten in den Registern erfolgt, die während der Ausführung des mindestens einen Eintragevorgangs (110) vorgenommen werden, wobei eine unmittelbare Zuweisung eine Eintragung in ein Register von vorhandenen Daten an einer Adresse ist, die durch einen Versatz definiert ist, der zu einem Wert einer absoluten Adresse ([PC, #0x34]) hinzugefügt wird.

3. Verfahren nach einem der Ansprüche 1 oder 2, wobei die Ausführung des Softwareprogramms eine Kompilierung eines Programmiersprachencodes (H_LVL_LANG) in maschinensprachliche Anweisungen (L_LVL_LANG) umfasst, und wobei mindestens eine maschinensprachliche Anweisung (LDR.N), die der Durchführung der Neuzuweisung gewidmet ist, während der Kompilierung durch eine Mnemonik (FMB()) im Programmiersprachencode (H_LVL_LANG) auferlegt wird.

4. Verfahren nach einem der vorhergehenden Ansprüche, wobei der mindestens eine Eintragevorgang (110) und der Überprüfungsvorgang (120) bei der Ausführung derselben Funktion des Softwareprogramms durchgeführt werden.

5. Verfahren nach Anspruch 4, wobei die Ausführung derselben Funktion des Softwareprogramms eine Kompilierung von Code umfasst, der eine Ressourcenoptimierung durchführt, die eine Wiederverwendung des Inhalts umfasst, der im Register für separate Anweisungen derselben Funktion zugewiesenen wird.

6. Verfahren nach einem der vorhergehenden Ansprüche, wobei der Vergleich (125) des Überprüfungsvorgangs (120) eine Generierung einer Fehlermeldung (129) umfasst, wenn die gelesenen Daten und die eingetragenen Daten nicht identisch sind.

7. Computerprogrammprodukt, das Anweisungen umfasst, die, wenn das Programm von einem Computer ausgeführt wird, diesen veranlassen, das Verfahren (100) nach einem der Ansprüche 1 bis 6 durchzuführen.

8. Computerlesbares Medium, das Anweisungen umfasst, die, wenn sie von einem Computer ausgeführt werden, diesen veranlassen, das Verfahren (100) nach einem der Ansprüche 1 bis 6 durchzuführen.

9. Vorrichtung, die einen Prozessor (CPU) umfasst und einen Programmspeicher (PM), der konfiguriert ist, um ein kompiliertes Softwareprogramm (L_LVL_LANG) zu enthalten, das zur Ausführung durch den Prozessor (CPU) bestimmt ist, wobei das Softwareprogramm Anweisungen umfasst, die, wenn sie vom Prozessor ausgeführt werden, dieses veranlassen, das Verfahren (100) nach einem der Ansprüche 1 bis 6 durchzuführen.

## Claims

1. A method for verifying execution of a compiled software program stored in a program memory of a processor and executed by the processor, the method comprising at least one write operation (110), said at least one write operation (110) compiled comprising:
- assigning a destination address in a register of the processor (111);
- writing a piece of data to the location pointed to by the destination address contained in the register (113);
wherein a compiled verification operation (120) comprises:
- reassigning the same destination address in the same register (121);
- reading the piece of data contained at the location pointed to by the destination address contained in the register after said reassigning (123);
- comparing the piece of data read and the piece of data written (125).

2. The method according to claim 1, wherein the reassigning (121) of the verification operation (120) is carried out for all the immediate assignments of data in registers made upon executing said at least one write operation (110), an immediate assignment being writing a piece of data present at an address defined by an offset added to a value of an absolute address ([PC, #0x34]) in a register.

3. The method according to one of claims 1 or 2, wherein executing said software program comprises compiling a programming language code (H_LVL_LANG) into machine language instructions (L_LVL_LANG), and wherein at least one machine language instruction (LDR.N) dedicated to the implementation of said reassigning is imposed upon compiling by a mnemonic (FMB()) in the programming language code (H_LVL_LANG).

4. The method according to one of the preceding claims, wherein said at least one write operation (110) and the verification operation (120) are implemented in executing a same function of the software program.

5. The method according to claim 4, wherein executing said same function of the software program comprises compiling code implementing resource optimisation comprising reusing the contents assigned in said register for instructions distinct from said same function.

6. The method according to one of the preceding claims, wherein said comparing (125) the verification operation (120) comprises generating an error message (129) if the piece of data read and the piece of data written are not identical to each other.

7. A computer program product comprising instructions which, when the program is executed by a computer, cause the computer to implement the method (100) according to one of claims 1 to 6.

8. A computer-readable medium comprising instructions which, when executed by a computer, cause the computer to implement the method (100) according to one of claims 1 to 6.

9. A device comprising a processor (CPU), a program memory (PM) configured to contain a compiled software program (L_LVL_LANG) for execution by the processor (CPU), the software program comprising instructions which, when executed by the processor, cause the the processor to implement the method (100) according to one of claims 1 to 6.
